# EUROPEAN PATENT APPLICATION

(11) **EP 2 515 263 A1**
(43) Date of publication of application: **24.10.2012**
(21) Application number: 11305787.1
(22) Date of filing: 22.06.2011
(51) Int. Cl.: G06Q 10/00, G06F 9/44

(54) **Computer-implemented method and system for interacting with a user**

(30) Priority: 22.04.2011 EP 11163596
(71) Applicant: Amadeus S.A.S., 06410 Biot (FR)
(72) Inventor: Alberola, Bertrand, 06370 MOUANS SARTOUX (FR); Chauvin, Stéphane, 06560 VALBONNE (FR); Bzodek, Gaëtan, 06530 PEYMEINADE (FR); Chapeland, Jean-Baptiste, 06220 GOLFE JUAN (FR); Corbucci, Serge, 06410 BIOT (FR)
(74) Representative: Hautier, Nicolas

(57) **Abstract**

**AMADEUS sas**

A computer-implemented method is disclosed for interacting with a user. The method includes receiving information from a user via a configuration tool (30), the information being related to a request made by the user to implement a user interface for a bilateral special service request (SSR); and using the received information, in conjunction with a passenger name record service framework (PSF), implementing a user-specific user interface to permit one or more passenger name record elements (1A, ..,1G) associated with an instance of the requested bilateral SSR to be included as an element of an instance of a passenger name record (PNR). Also disclosed is a system that is configured to perform the steps of the method with the use of at least one data processor.

## Description

### TECHNICAL FIELD

The exemplary embodiments of this invention relate generally to methods and apparatus to manage a set of elements of a passenger name record (hereafter referred to as PNR) as a consistent service containing dynamically defined data.

### BACKGROUND

In the context of the travel industry a PNR is a record in a database of a Computer Reservation System (CRS). The PNR contains the itinerary for a passenger or for a group of passengers traveling together. The CRS can be a large Global Distribution System (GDS) such as Amadeus s.a.s. The IATA (International Air Transport Association) has defined a standardized layout and content for the PNR. When a passenger books an air travel itinerary the travel agent (or the travel website user) creates a PNR in the applicable CRS. The PNR is identified in a particular database by a record locator.

A Special Service Request (SSR) is an element of the PNR that is used by airlines to capture information regarding, for example, special meal requests, special baggage handling requests, un-accompanied minors and passengers with disabilities.

From the perspective of the GDS an airline may be considered as a customer. For an airline customer there can be defined basically two types of SSR.

The first type of SSR can be an IATA SSR, or Common AIRIMP SSR. AIRIMP (ATA/IATA Reservations Interline Message Procedures - Passenger) is the sole reference source of universally agreed upon communications standards for the handling of Passenger Reservations Interline Messages (www.iata.org). The first type of SSR is compliant with the industry standard specified by AIRIMP. The attributes, processes and restrictions defined for these SSR apply to all airlines and carriers.

The second type of SSR can be a bilateral SSR. The attributes, processes and restrictions defined for the bilateral SSR are customizable for a particular airline and carrier.

It can be the case that a customer of the GDS specifies its requirements regarding bilateral SSR management through a user interface provided by the GDS. One example of such a user interface is Altéa Reservation Desktop (ARD).

By way of background, an Altéa suite is provided by Amadeus s.a.s. and contains four main modules: Altéa Reservation, that enables Amadeus' airline customers to manage all of their bookings, fare prices and ticketing through a single interface and is compatible with distribution via direct and indirect channels, both online and offline; Altéa Inventory, that permits airlines to create and manage schedules, seat capacity and associated fares on a flight-by-flight basis; Altéa Departure Control, that covers many aspects of flight departure, including check-in, issuance of boarding passes, gate control and other functions related to passenger flight boarding; and Altéa e-commerce, a suite of solutions that seeks to improve the profitability and efficiency of the airline e-commerce sales and support process.

For the bilateral SSR item the customer can specify via the user interface (e.g., via ARD) a list of associated PNR elements that are to be handled along with the SSR element itself. For instance, when an unaccompanied minor SSR (UMNR) is requested, the ARD must also provide specific contact points to be filled with the name and phone number of the adult that will meet the minor at the arrival airport. The contact points are stored in the PNR through what is referred to as Other Service Information (OSI) elements. The OSI elements are basically notes attached to a PNR that do not require attention by the airline.

Whereas every airline (customer) shares the same common logic regarding standard services (the first type of SSRs), implementing a bilateral service typically requires a customized solution for each customer. One problem that can arise in this context for the GDS (assuming in this case that it is the GDS that is providing the bilateral SSR for the customer airline) is the increased cost and complexity of implementing customized bilateral service requests or services.

### SUMMARY

The foregoing and other problems are overcome, and other advantages are realized, in accordance with the embodiments of this invention.

In a first aspect thereof the exemplary embodiments provide a computer-implemented method for interacting with a user. The method comprises receiving information from a user via a configuration tool, the information being related to a request made by the user to implement a user interface for a bilateral special service request; and in performing the following steps through at least a processor: using the received information, in conjunction with a passenger name record service framework, implementing a user-specific user interface to permit one or more passenger name record elements associated with an instance of the requested bilateral special service request to be included as an element of an instance of a passenger name record.

Optionally, the invention may comprise at least one of the following facultative features and steps:
In accordance with the first aspect the user interface is configured to enable the creation of the instance of the bilateral special service request to be included as the element in the instance of the passenger name record, as well as to enable the modification of a previously created instance of the bilateral special service request that was previously included as the element in the instance of the passenger name record.
Further in accordance with the first aspect the method also comprises verifying consistency of the implemented bilateral special service request at least in part by verifying passenger name record element format consistency.
Further in accordance with the first aspect the user interface is configured to input from the user passenger name record service framework data objects, and further comprising formatting the passenger name record service framework data objects into passenger name record data element objects for storage in the instance of the passenger name record.
Further in accordance with the first aspect the method also comprises, in response to a receipt of a request from the user to retrieve a passenger name record, accessing a database held in data storage means to retrieve the requested passenger name record; converting at least a portion of the passenger name record into corresponding passenger name record service framework element data objects; converting the passenger name record service framework element data objects into passenger name record service framework user interface data and returning the data to the user.
Further in accordance with the first aspect the method also comprises enabling the user to define a passenger name record service framework group comprised of at least one mandatory passenger name record service framework element comprised of at least one passenger name record service framework parameter, and an optional at least one passenger name record service framework remark comprised of a passenger name record service framework free text parameter.
Further in accordance with the first aspect of this invention the mandatory passenger name record service framework element is further comprised of at least one passenger name record service framework comment comprised of a free text parameter.
Further in accordance with the first aspect the method also comprises retrieving a passenger name record service framework group from passenger name record data by performing steps of checking if a passenger name record element is compatible with configured passenger name record configuration framework element constraint(s); parsing free text of the passenger name record element and extracting passenger name record service framework parameters as retrieved passenger name record service framework elements; and merging retrieved passenger name record service framework elements into the passenger name record service framework group.
Further in accordance with the first aspect the step of merging comprises sorting a list of configured passenger name record service framework elements according to their granularity, where some elements are most fine-grained in terms of passenger and segment association, and considering the most fine-grained elements first when creating a passenger name record service framework group, and further comprising building a list of alike elements groups each contains passenger name record service framework elements sharing the same free text and characteristics, where at least one alike element group is built for each passenger name record service framework element, and merging passenger name record service framework elements passenger name record service framework groups by iterating over alike element groups starting from the most fine-gained PSF elements.
Further in accordance with the first aspect of this invention an alike element group returns a combination of passenger name record service framework elements, further comprising verifying if the returned combination is compliant with the passenger name record service framework group being built in terms of passenger and segment association, where if the returned combination is not compliant requesting another combination of passenger name record service framework elements from the alike element group and repeating the step of verifying, and where if the returned combination is compliant considering a next element from the passenger name record service framework group until all passenger name record service framework elements have been retrieved and the passenger name record service framework group is completed, and continuing for a next instance of the passenger name record service framework group until no further passenger name record service framework Group instance can be built.
Further in accordance with the first aspect of this invention, the step of merging is performed in accordance with element merging rules, where individual ones of the elements are subject to at least one associated parameter rule and association rule.
Further in accordance with the first aspect of this invention, a particular passenger name record service framework group is retrieved only if all mandatory elements of the group are retrieved, and where retrieving a passenger name record service framework group comprises interpreting passenger name record content based on the passenger name record service framework configuration.
Further in accordance with the first aspect the passenger name record elements are selected to be one or more of a Remark (RM), an Other Service Information (OSI), an Option Element (OP), a Special Service Request (SSR) or a Special Keyword (SK).

The exemplary aspects of this invention also encompass a non-transitory computer-readable medium that contains software program instructions, where execution of the software program instructions by at least one data processor results in performance of operations that comprise execution of the method as described above.

According to a third aspect of this invention there is a provided a system to interact with a user. The system is characterized in that it is arranged to perform the following steps with at least one data processor: receiving information from a user via a configuration tool, the information being related to a request made by the user to implement a user interface for a bilateral special service request; and using the received information, in conjunction with a passenger name record service framework, implementing a user-specific user interface to permit one or more passenger name record elements associated with an instance of the requested bilateral special service request to be included as an element of an instance of a passenger name record.

Optionally, the system according to the third aspect of the invention may comprise at least one of the following facultative features and steps.
In accordance with the third aspect of this invention, the user interface is configured to enable the creation of the instance of the bilateral special service request to be included as the element in the instance of the passenger name record, as well as to enable the modification of a previously created instance of the bilateral special service request that was previously included as the element in the instance of the passenger name record.
Further in accordance with the third aspect of this invention, the system is configured to verify consistency of the implemented bilateral special service request at least in part by verifying passenger name record element format consistency.
Further in accordance with the third aspect of this invention, the user interface is configured to input from the user passenger name record service framework data objects, and further formatting the passenger name record service framework data objects into passenger name record data element objects for storage in the instance of the passenger name record.
Further in accordance with the third aspect of this invention, the system is configured so that in response to a receipt of a request from the user to retrieve a passenger name record, accessing a database held in data storage means to retrieve the requested passenger name record; converting at least a portion of the passenger name record into corresponding passenger name record service framework element data objects; converting the passenger name record service framework element data objects into passenger name record service framework user interface data and returning the data to the user.
Further in accordance with the third aspect of this invention, the system is configured to enable the user to define a passenger name record service framework group comprised of at least one mandatory passenger name record service framework element comprised of at least one passenger name record service framework parameter, and an optional at least one passenger name record service framework remark comprised of a passenger name record service framework free text parameter.
Further in accordance with the third aspect of this invention, the mandatory passenger name record service framework element is further comprised of at least one passenger name record service framework comment comprised of a free text parameter.
Further in accordance with the third aspect of this invention, the system is configured to retrieve a passenger name record service framework group from passenger name record data by steps of checking if a passenger name record element is compatible with configured passenger name record configuration framework element constraint(s); to parse free text of the passenger name record element and extracting passenger name record service framework parameters as retrieved passenger name record service framework elements; and to merge retrieved passenger name record service framework elements into the passenger name record service framework group.
Further in accordance with the third aspect of this invention, the system is configured so that sorting a list of configured passenger name record service framework elements according to their granularity, where some elements are most fine-grained in terms of passenger and segment association, and considering the most fine-grained elements first when creating a passenger name record service framework group, and further comprising building a list of alike elements groups each contains passenger name record service framework elements sharing the same free text and characteristics, where at least one alike element group is built for each passenger name record service framework element, and merging passenger name record service framework elements passenger name record service framework groups by iterating over alike element groups starting from the most fine-gained PSF elements.
Further in accordance with the third aspect of this invention, the system is configured so that an alike element group returns a combination of passenger name record service framework elements, and in that the system allows verifying if the returned combination is compliant with the passenger name record service framework group being built in terms of passenger and segment association, where if the returned combination is not compliant requesting another combination of passenger name record service framework elements from the alike element group and repeating the step of verifying, and where if the returned combination is compliant considering a next element from the passenger name record service framework group until all passenger name record service framework elements have been retrieved and the passenger name record service framework group is completed, and continuing for a next instance of the passenger name record service framework group until no further passenger name record service framework Group instance can be built.
Further in accordance with the third aspect of this invention, the system is configured so that where the step of merging is performed in accordance with element merging rules, where individual ones of the elements are subject to at least one associated parameter rule and association rule.
Further in accordance with the third aspect of this invention, the system is configured so that a particular passenger name record service framework group is retrieved only if all mandatory elements of the group are retrieved, and so that retrieving a passenger name record service framework group comprises interpreting passenger name record content based on the passenger name record service framework configuration.
Further in accordance with the third aspect of this invention, the system is configured so that the passenger name record elements are selected to be one or more of a Remark (RM), an Other Service Information (OSI), an Option Element (OP), a Special Service Request (SSR) or a Special Keyword (SK).

According to a fourth aspect of this invention there is a provided a computer-implemented method, comprising the following steps performed with at least one data processor:
inputting from a user passenger name record service framework data objects that are associated with an instance of a special service request; and
formatting the passenger name record service framework data objects into passenger name record data element objects for storage in an instance of the passenger name record.

According to the fourth aspect of this invention the method further comprising:
in response to a receipt of a request from the user to retrieve a passenger name record, accessing a database held in data storage means to retrieve the requested passenger name record;
converting at least a portion of the passenger name record into corresponding passenger name record service framework element data objects;
converting the passenger name record service framework element data objects into passenger name record service framework user interface data and returning the data to the user for a display through display means.

Optionally, the system according to the fourth aspect of the invention may comprise at least one of the following facultative features and steps:
Further in accordance with the fourth aspect of this invention, the method comprises enabling the user to define a passenger name record service framework group comprised of at least one mandatory passenger name record service framework element comprised of at least one passenger name record service framework parameter, and an optional at least one passenger name record service framework remark comprised of a passenger name record service framework free text parameter.
Further in accordance with the fourth aspect of this invention, the mandatory passenger name record service framework element is further comprised of at least one passenger name record service framework comment comprised of a free text parameter.
Further in accordance with the fourth aspect of this invention, the method comprises retrieving a passenger name record service framework group from passenger name record data by steps of checking if a passenger name record element is compatible with configured passenger name record configuration framework element constraint(s); parsing free text of the passenger name record element and extracting passenger name record service framework parameters as retrieved passenger name record service framework elements; and merging retrieved passenger name record service framework elements into the passenger name record service framework group.
Further in accordance with the fourth aspect of this invention, merging comprises sorting a list of configured passenger name record service framework elements according to their granularity, where some elements are most fine-grained in terms of passenger and segment association, and considering the most fine-grained elements first when creating a passenger name record service framework group, and further comprising building a list of alike elements groups each contains passenger name record service framework elements sharing the same free text and characteristics, where at least one alike element group is built for each passenger name record service framework element, and merging passenger name record service framework elements passenger name record service framework groups by iterating over alike element groups starting from the most fine-gained PSF elements.
Further in accordance with the fourth aspect of this invention, an alike element group returns a combination of passenger name record service framework elements, further comprising verifying if the returned combination is compliant with the passenger name record service framework group being built in terms of passenger and segment association, where if the returned combination is not compliant requesting another combination of passenger name record service framework elements from the alike element group and repeating the step of verifying, and where if the returned combination is compliant considering a next element from the passenger name record service framework group until all passenger name record service framework elements have been retrieved and the passenger name record service framework group is completed, and continuing for a next instance of the passenger name record service framework group until no further passenger name record service framework Group instance can be built.
Further in accordance with the fourth aspect of this invention, where the step of merging is performed in accordance with element merging rules, where individual ones of the elements are subject to at least one associated parameter rule and association rule.
Further in accordance with the fourth aspect of this invention, a particular passenger name record service framework group is retrieved only if all mandatory elements of the group are retrieved, and retrieving a passenger name record service framework group comprises interpreting passenger name record content based on the passenger name record service framework configuration.
Further in accordance with the fourth aspect of this invention, the method comprises initial steps of
   receiving information from the same or a different user via a configuration tool, the information being related to a request made by the user to implement a user interface for the special service request; and
   using the received information, in conjunction with a passenger name record service framework, implementing a user-specific user interface to permit one or more passenger name record elements associated with an instance of the requested special service request to be included as an element of an instance of a passenger name record.
Further in accordance with the fourth aspect of this invention, the passenger name record elements are selected to be one or more of a Remark (RM), an Other Service Information (OSI), an Option Element (OP), a Special Service Request (SSR) or a Special Keyword (SK).
Further in accordance with the fourth aspect of this invention, the user interface is configured to enable the creation of the instance of the special service request to be included as the element in the instance of the passenger name record, as well as to enable the modification of a previously created instance of the special service request that was previously included as the element in the instance of the passenger name record.
Further in accordance with the fourth aspect of this invention, the method comprises verifying consistency of the implemented special service request at least in part by verifying passenger name record element format consistency.

### BRIEF DESCRIPTION OF THE DRAWINGS

The foregoing and other aspects of the embodiments of this invention are made more evident in the following Detailed Description, when read in conjunction with the attached Drawing Figures, wherein:
Figure 1 shows an example of a requirement of a customer for a bilateral service management, in this case an UMNR (unaccompanied minor) UI.
Figure 2 depicts an overview of a PSF service booking flow with respect to a business engine and related DBs shown in Figure 7.
Figure 3 shows a PSF Booking sequence diagram in accordance with the exemplary embodiments of this invention.
Figure 4 depicts an overview of a PSF Service retrieve flow.
Figure 5 shows in greater detail the PSF Service retrieve operation as a flow sequence diagram.
Figure 6 shows an overview of PSF Configuration tool flow.
Figure 7 is a simplified high level system block diagram of various components that are suitable for implementing the exemplary embodiments of this invention.
Figure 8 shows various PSF Group parameters that are useful in explaining a non-limiting example of the invention.
Figure 9 shows a logic flow diagram of an exemplary algorithm to perform a merge operation that is part of a PSF Group retrieval operation.
Figure 10 depicts a non-limiting example of a tree data structure that is used during parsing operation performed during retrieval of a PSF Group.

### DETAILED DESCRIPTION

In the context of the exemplary embodiments of this invention a PNR Service Framework (PSF) can be considered to include a set comprised of plural PNR elements, including at least one SSR and associated elements.

As employed herein a PSF service can be considered to include a set of PNR elements, where a given one of the PNR elements can be a Remark (RM), an Other Service Information (OSI), an Option Element (OP), a Special Service Request (SSR) or a Special Keyword (SK). The PSF service can be considered as a set of parameters and their format within each element contained in the PSF service.

One goal of the exemplary embodiments of this invention is to reduce, by using PSF services, the cost and complexity of adding and/or modifying a customer service configuration.

In the exemplary embodiments a system is able to display, load, validate, format, book, retrieve and modify any PSF service. It can be shared so as to be used by other products using, for example, a JAVA™ common platform (JCP) (JAVA is a registered trademark of Oracle America, Inc.)

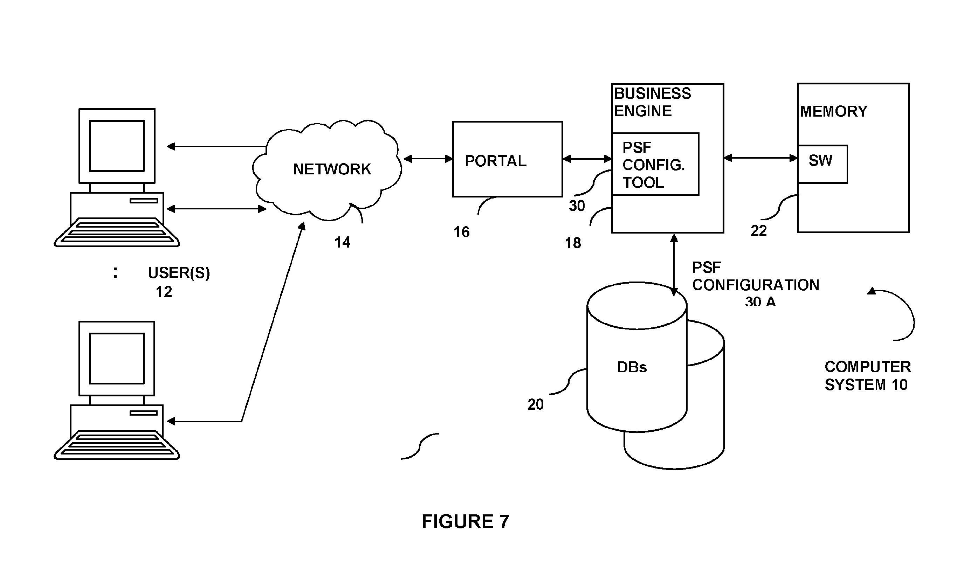

Figure 7 shows a simplified high level system block diagram of various components that are suitable for implementing the exemplary embodiments of this invention. For the purposes of describing the exemplary embodiments a "customer" may be considered to be a client of the GDS, such as an airline, while a "user" could be, for example, an employee of the airline, or an independent contractor or some other person hired by the airline, who enters data via a user interface as described in detail below. The words "customer" and "user" may be used interchangeably.

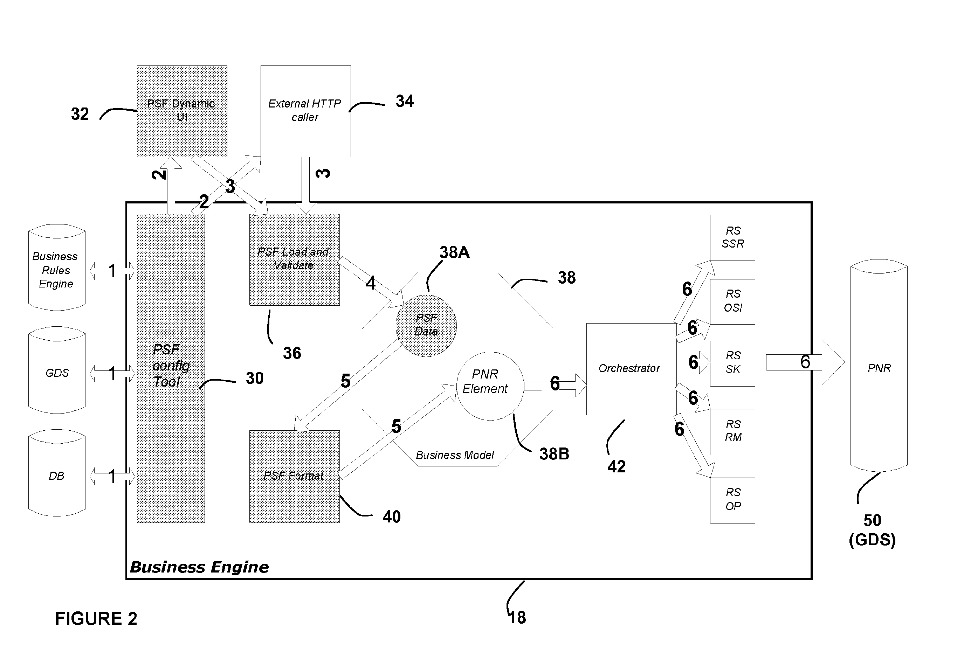

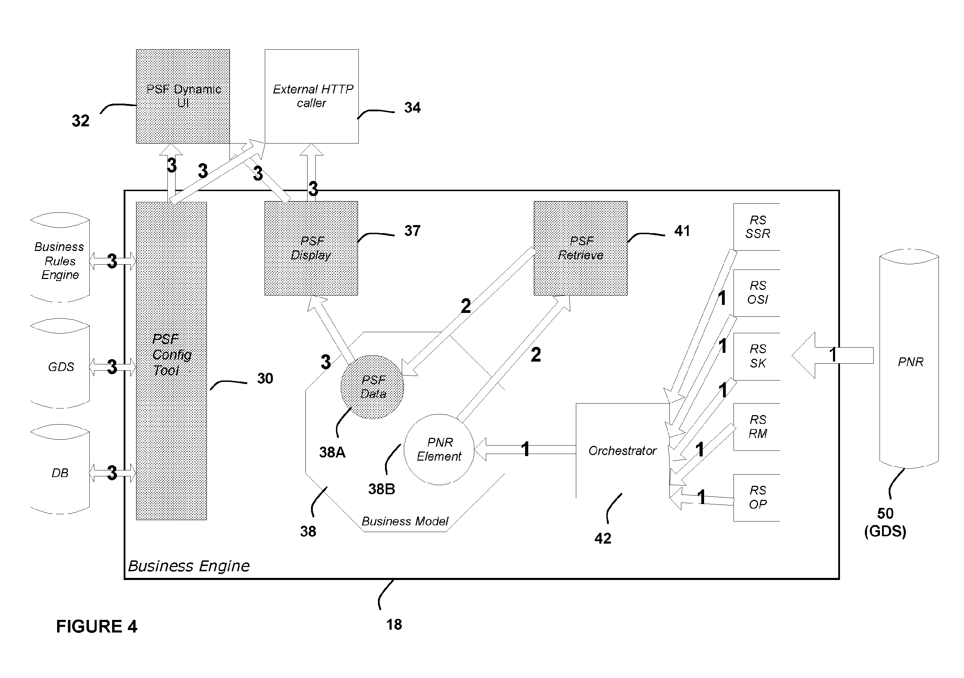

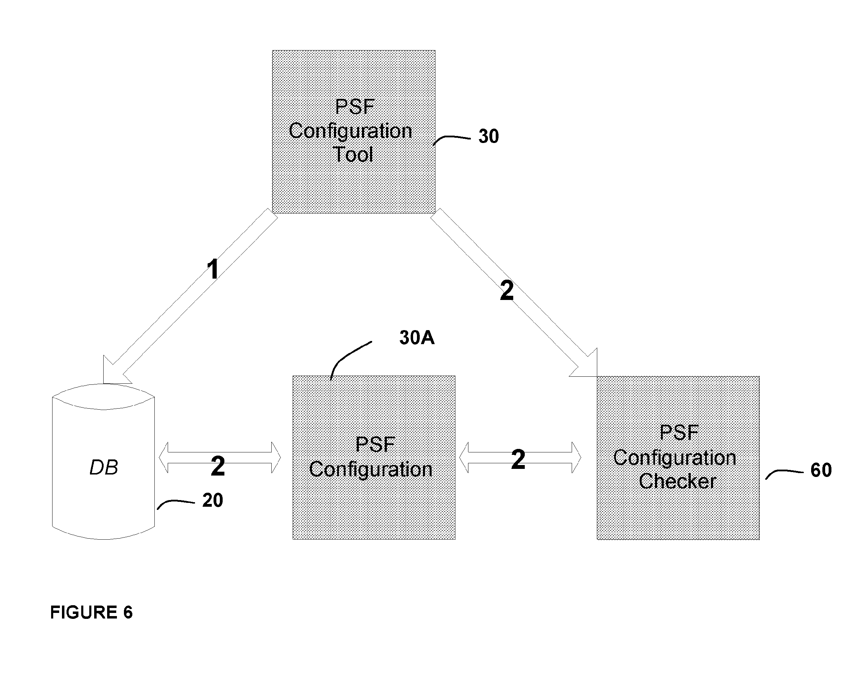

In Figure 7 a computer system 10 is associated with a service provider, such as a GDS. The system 10 includes a portal 16 to a network 14 (e.g., the Internet) whereby users 12 (e.g., airline customers) can interact with a business engine 18 to invoke PSF services in accordance with the exemplary embodiments of this invention. The portal 16 can include at least one web server. Connected/coupled with the portal 16 is the business engine 18 having access to various databases (DBs) 20, as will be described in further detail below. In practice the DBs 20 could be implemented using a plurality of data storage systems and databases that are geographically distributed. The business engine 18 can be considered to include a number of subsystems, such as those depicted in Figures 2 and 4, and to also be connected with other engines and services 22 as needed. The system 10 is assumed to implement a customer user interface, such as the above-mentioned ARD, and to provide a PSF Configuration tool 30 (also shown in Figure 6) for use by the customers 12. The PSF Configuration tool 30 forms a PSF Configuration 30A which can be assumed to be stored in the DB 20 from where it can be retrieved, presented to the customer 12, and modified if needed. The business engine 18 and any related engines can each be implemented using one or more suitable computer hardware/software platforms, and can be embodied as servers containing one or more data processors and associated memory storing computer software and data.

With specific regard now to customer bilateral SSR management, one non-limiting example is as follows. Assume that a customer 12 requests that the user interface handle 19 client specific services, containing 51 SSRs and 27 associated elements. Implementing this requirement by using the PSF does not require any coding. That is, by using the PSF in accordance with the invention the bilateral SSR management does not require any special dedicated programming, thereby reducing cost, complexity and the time needed to implement the customer's request.

An example of PNR element management is as follows. A customer 12 requests a special group mask for the Group PNR booking of the customer. The group mask is booked in the PNR as a set of Special Keywords (SK).While a custom User Interface (UI) is developed to support the customer conditional logic, the SKs are defined into the PSF configuration. The business engine 18 is then able to interpret dynamically the user input and book the SK in the PNR without requiring any coding.

The PSF can be used to manage any set of PNR elements supported by PSF.

With respect to testing and prototyping to reduce time to market, by using the PSF Configuration tool 30 the customer 12 is able to create a customer-specific PSF configuration. Due at least in part to this PSF configuration, and without any additional coding, a customized UI can be generated to quickly prototype a customer solution for a business scenario validation and/or for testing purposes. Once validated, the customized UI can be deployed for production.

As will be described in further detail below, the use of the exemplary embodiments provides a number of advantages and technical effects. For example, the PSF service definition is dynamic and does not depend on external business data or processes. Creating a new PSF service, or updating an existing PSF service, is very quick and fail-proof. Using the dynamic UI the PSF service deployment is also immediate.

Further by example, the dynamic PSF service definition is combined with full support of GDS business constraints. More specifically, the PNR is the persistent repository of every booking. This constraint does not allow using a dynamic data persistence solution "off /the shelf". However, the PSF is built around this constraint, providing dynamic PSF service definition and UI generation features while including business validation services associated with the GDS PNR.

Further by example, dynamic UI generation is obtained from the PSF configuration. For all PSF services a user interface can be dynamically generated and customized based only on the PSF configuration.

Further by example, modifying a PSF service has the same low level of complexity as creating a new PSF service. The use of a booking mask allows the system 10 to readily book a set of PNR element while not providing retrieval and modification functionalities. The PSF identifies the PSF services from the PNR element(s), allowing consistent display and modification, thereby facilitating the PSF service modification.

An aspect of the exemplary embodiments of this invention relates to dynamic service configuration. One aspect of the dynamic service configuration is that the consistency of the configuration is guaranteed. For example, the customer 12 defines business services through the PSF Configuration tool 30. The PSF Configuration tool 30 verifies PNR element format consistency against central system constraints. The PSF Configuration tool 30 also verifies PSF service compatibility with each other, to guarantee that a PNR element cannot be misinterpreted as part of another PSF service for the same configuration set. The PSF Configuration tool 30 also verifies PSF service validity dates, thereby ensuring that only one configuration is valid at any time for the same PSF service.

Another aspect of dynamic service configuration relates to service scope. A PSF Configuration allows defining a scope for each service. A PSF service may be applicable only to, for example, a GDS provider, an airline, or to a particular customer office ID. The PSF is able to recognize which scope applies to a PSF service, and choose which configuration is used to retrieve and interpret the PSF service.

Another aspect of dynamic service configuration relates to service versioning. That is, the PSF Configuration 30A supports versioning. Due to the presence of validity dates the same PSF service can have several versions, allowing retrieval and modification of services created with an older version of the configuration. Business rules can be defined to automatically convert a PSF service from one version to another version.

Another aspect of dynamic service configuration relates to configuration import/export capabilities. A particular PSF Configuration 30A can be loaded from several different sources, such as an XML file or a database. The various sources are merged into a consistent PSF Configuration 30A that can be exported.

Another aspect of dynamic service configuration relates to an ability to have an immediate impact on PSF business logic, as a PSF Configuration update is immediately reflected in the PSF dynamic UI and PSF business logic.

Another aspect of the exemplary embodiments of this invention relates to dynamic business rules. That is, a PSF service can be associated with a set of business rules. Considering a specific business environment a PSF service, element or parameter can be enabled or disabled. The element and parameter format can be dynamically modified.

Further, business rules can be interpreted at run time by the dynamic UI. For example, an element can be enabled only if a parameter is set to a given value.

Another aspect of the exemplary embodiments of this invention relates to customizable business logic. The PSF allows sharing common and customizable business logic with customer-specific data. The common customizable logic can be composed of various aspects. For example, one aspect of the common customizable logic can be an ability to load and validate user inputs against customer-defined constraints (regular expression). Further by example, another aspect of the common customizable logic can be an ability to provide custom error management, with customized error messages for each service. Further by example, another aspect of the common customizable logic can be an ability to provide verification against an external provider or business rules engine. For example, a PSF service can be connected with an inventory system to verify service eligibility, or to a fare quote engine in the case of chargeable services.

Further by example, another aspect of the common customizable logic can be an ability to provide for the formatting of PNR elements to be booked.

Further by example, another aspect of the common customizable logic can be an ability to provide fine-grain booking of PSF services as a transaction. In this case only the modified elements are booked using the PSF. If the mandatory elements are not successfully added to the PNR, a rollback service restores the previous service instance in the PNR, without forcing the user to ignore his/her PNR session.

Further by example, another aspect of the common customizable logic can be an ability to retrieve the PSF service from an existing PNR, while another is to provide an ability to display and modify the PSF service.

With respect to the above-mentioned dynamic UI, the PSF Configuration tool 30 is used to dynamically generate a customer-specific UI, allowing quick prototyping and testing.

This dynamic UI layout can be configured to cope with a customer-defined template. The dynamic UI is able to support conditional logic in its display. Element and parameter constraints can be modified dynamically to cope with the business environment. If for some reason the dynamic UI does not fulfill all the customer-specific display logic, the PSF can also be plugged into a customer-specific UI. Due to the use of simple HTTP requests, the custom UI can retrieve the PSF Configuration 30A for a given service, and manage a PSF service creation and modification.

As a still further advantage that is realized by the use of the exemplary embodiments, when the PSF is used to book PNR elements in the PNR the PSF usage allows hiding PNR constraints from the end user. For example, a set of parameters, with localized labels and description, is displayed to manage the PSF service, while these parameters are grouped and formatted to be booked into PNR elements in the PNR. The PSF can also be configured to hide from the output the low-level elements that are part of an identified PSF service.

In addition the PSF is compatible with existing business processes, as the PSF is non-invasive, meaning it has no impact on the existing business processes. For example, any PNR element booked by the PSF can be retrieved, displayed and modified as a regular PNR element outside of the PSF. Also be example, any PNR element booked outside the PSF can be retrieved, displayed and modified through the PSF, so long as it is compliant with the specific configuration of the PSF.

A further object matter of the present invention is a computer program product stored in a non-transitory computer-readable memory medium and arranged to perform the method according to any one of the preceding features.

Another object matter of the present invention is system to interact with a user characterized in that it is arranged to perform the following steps with at least one data processor:
- receiving information from a user via a configuration tool, the information being related to a request made by the user to implement a user interface for a bilateral special service request; and
- using the received information, in conjunction with a passenger name record service framework, implementing a user-specific user interface to permit one or more passenger name record elements associated with an instance of the requested bilateral special service request to be included as an element of an instance of a passenger name record.

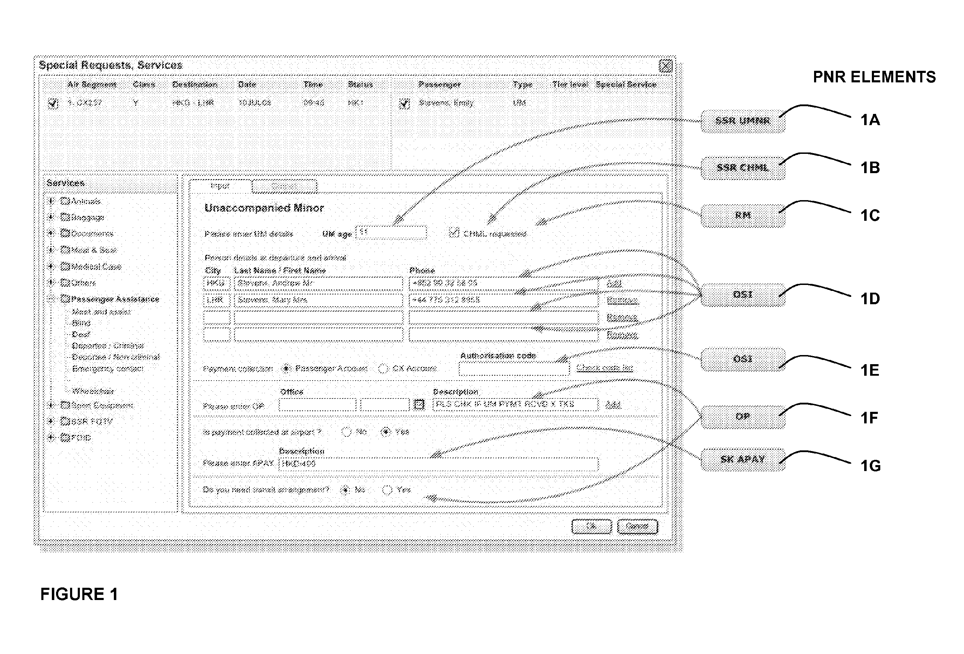

The foregoing and other aspects of the invention will now be described in further detail with respect to Figures 1-6, 8 and 9.

Figure 1 shows an example of a requirement of a customer 12 for a bilateral service management, in this case an UMNR (unaccompanied minor) UI. The exemplary screen-shot defines the requirement of the customer 12 for the unaccompanied minor service user interface. The boxes to the right of the screen identify those PNR elements that are used to store (book) the data collected from the screen into the PNR. In this example the UMNR is named E. Stevens for a flight from HKG to LHR. With respect to the details of the unaccompanied minor that are entered, the unaccompanied minors age (11) are stored in the SSR UMNR 1A. The fact that a child meal (CHML) is requested is stored into the SSR CHML 1 B as well as into the Remark (RM) 1C. In this example the name of the person accompanying the child to the departure location (HKG) is E. Stevens and the person meeting the child at the arrival location (LHR) is B. Stevens. These names and their respective phone numbers are stored into a first Other Service Information (OSI) element 1 D, and data entered into an Authorization code field is stored into a second OSI element 1 E. An Option Element (OP) 1 F stores information entered into a description field (in this case verifying that payment for the unaccompanied minor is received) as well as the state of a transit arrangement needed button (yes/no). A Special Keyword (SK) APAY 1G stores the entered description (e.g., 'HKD/400' in this example) of the payment information.

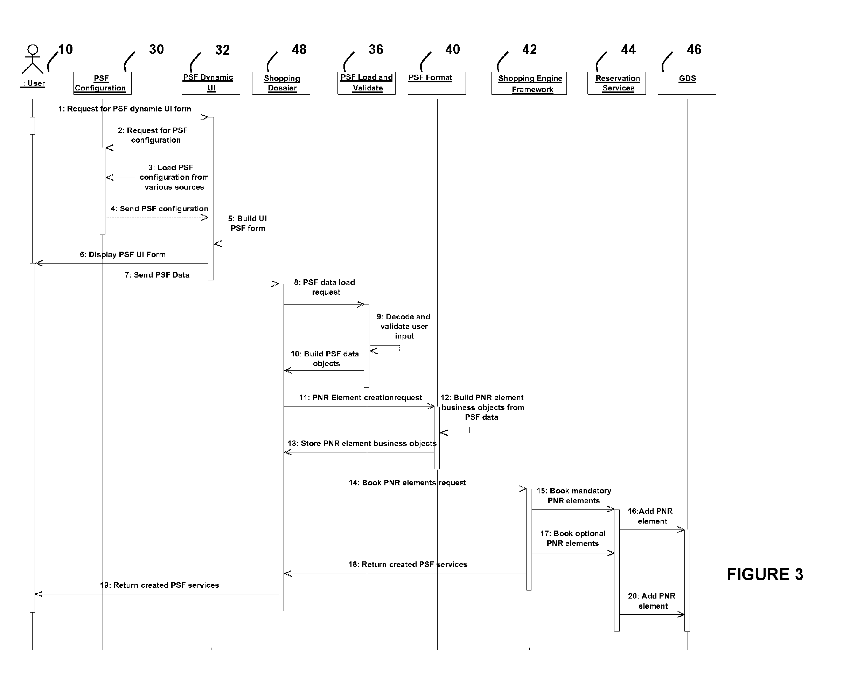

Figure 2 depicts an overview of the PSF service booking flow with respect to the business engine 18 and related DBs 20 and other engines/services 22 as shown in Figure 7. The numbers associated with the various items/steps below refer to the numbered flow arrows in Figure 2.
1. The PSF configuration tool 30 merges data from different sources (e.g., GDS, database (DB) business rules).
2. The PSF configuration tool 30 exports the merged configuration data to a PSF dynamic UI 32 and/or to an external HTTP caller 34. The PSF dynamic UI 32 builds the user interface according to this configuration.
3. 4. A PSF load and validate function/module 36 loads and validates the input received from the PSF dynamic UI 32 and/or to the external HTTP caller 34. If valid, the PSF data objects 38A so entered are stored in a business model 38. Otherwise, customized error messages can be returned to the caller.
5. The PSF in cooperation with a PSF Format function/module 40 creates or modifies PNR element objects 38B in the business model 38, based on the PSF data 38A and PSF configuration. PNR element objects are also referred to as PNR data element objects.
6. An orchestrator function/module 42 operates to book the PNR element objects 38B into the applicable PNR 50, in cooperation with a Shopping Engine Framework (SEF) 42, via Reservation Services (RS) 44 elements SSR, OSI, SK, RM and OP. The SEF 42 is shown in Figure 3.

Described now is further information related to the various actors shown in Figure 2.
1/ The DBs are the configuration providers. These are all the systems where the configuration could be stored.
2/ The PSF configuration tool 30 is the service that handles the retrieval, storage and merging of the configuration.
3/ The UIs 32 are the technical consumers of the PNR service framework.
4/ The PSF load and validate 36 is the service the verifies that the provided data is consistent and loads the data provided by the UIs 32 as flat HTML into the relevant Business Model 38 used by the business engine 18.
5/ The PSF Format 40 is the service that translates the data given by the UIs 32 and stored in the relevant business model 38 into formatted GDS elements.
6/ The Business Model 38 is the object model representing the business of the GDS e-commerce platform. Within this model can be found the PSF data model and the GDS data model (PNR elements in the figure).
7/ The Orchestrator 42 is the service managing the order of booking of, for example, the PNR elements, global error handling, and all other functions that need to be coordinated.
8/ The RS Services (Reservation Services) are each dedicated to the handling of a specific PNR element (e.g., SSR, OSI, etc.)
9/ The GDS (Global Distribution System) is where the PNR is stored.

Figure 3 shows a PSF Booking sequence diagram in accordance with the exemplary embodiments of this invention. The numbers associated with the various items/steps below refer to the numbered flow arrows in Figure 3.
1. The customer (user) 10 makes a request for creation of a PSF dynamic UI form from the PSF dynamic UI 32.
2. A request for a PSF configuration is sent to the PSF configuration tool 30 from the PSF dynamic UI 32.
3. The PSF configuration 30 loads the PSF configuration from the various sources (corresponds to step 1 of Figure 2).
4. The PSF configuration 30 sends the loaded configuration to the PSF dynamic UI 32.
5. The PSF dynamic UI 32 builds a corresponding UI PSF form.
6. The PSF dynamic UI 32 sends the PSF UI form to the user for display to the user.
7. The user enters data into the form and sends the PSF data to a Shopping Dossier 48.
8. The Shopping Dossier 48 sends a PSF data load request to the PSF Load and Validate function/module 36.
9. The PSF Load and Validate function/module 36 decodes and validates the user input.
10. The PSF Load and Validate function/module 36, in cooperation with the Shopping Dossier 48, builds the PSF data objects 38A.
11. A PNR Element creation request is sent from the Shopping Dossier 48 to the PSF Format function/module 40.
12. The PSF Format function/module 40 builds the PNR element business objects 38B from the PSF data objects 38A.
13. The PSF Format function/module 40 stores the PNR element business objects 38B at the Shopping Dossier 48.
14. The Shopping Dossier 48 sends a request to book the PNR elements to the Shopping Engine Framework 42 (shown embodied as the orchestrator function/module 42 in Figure 2).
15. The Shopping Engine Framework 42 books the mandatory PNR elements to the Reservation Services 44.
16. The Reservation Services 44 adds the mandatory PNR elements to the applicable PNR at the GDS 46.
17. The Shopping Engine Framework 42 books the optional PNR elements to the Reservation Services 44.
18. The Shopping Engine Framework 42 returns the created PSF services to the Shopping Dossier 48.
19. The Shopping Dossier 48 returns the created PSF services to the user 10.
20. The Reservation Services 44 adds the optional PNR elements to the applicable PNR at the GDS 46.

The Shopping Dossier 48 refers to the specific business data model used for ARD and all services managing the evolution of the content of the model during the session. It is part of the booking engine. For example, in Figure 2 the Shopping Dossier 48 is what manages arrows 5 and the first set of arrows 6 (call to the orchestrator 42). In Figure 4 (discussed below) the Shopping Dossier 48 manages arrows 2 and 3.

Figure 4 depicts an overview of the PSF Service retrieve flow. Note the similarity of certain of the components to the embodiment of Figure 2. However, in Figure 4 the PSF Format 40 and the PSF Load and Validate 36 are not used, and instead a PSF Retrieve function/module 41 and a PSF Display function/module 37 are depicted. The numbers associated with the various items/steps below refer to the numbered flow arrows in Figure 4.
1. The Shopping Engine Framework 42 (orchestrator) retrieves the PNR 50 and stored PNR data element objects 38B to the business model 38.
2. Based on the PNR element objects 38B and the PSF configuration, the PSF Retrieve function/module 41 extracts the PSF data from the PNR elements 38B and stores the result as the PSF data 38A in the business model 38.
3. The PSF data 38A is converted by the PSF Display 37 to be appended to the output of the business engine 18, along with the PSF configuration. The PSF Dynamic UI 32 is enabled to interpret this output and display the PSF services to the user 10.

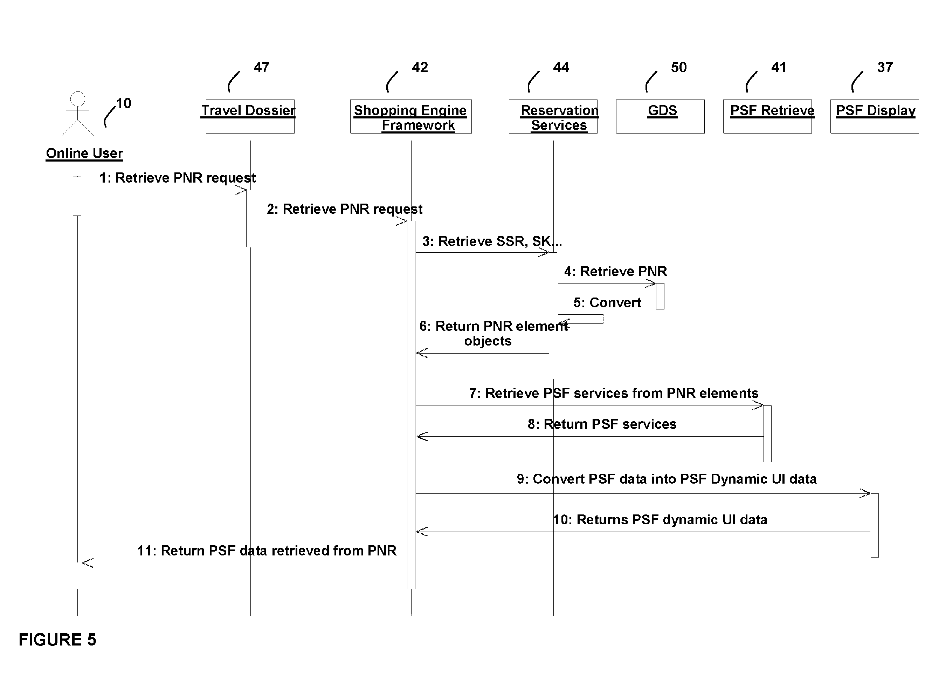

Figure 5 shows in greater detail the PSF service retrieve operation as a flow sequence diagram. The numbers associated with the various items/steps below refer to the numbered flow arrows in Figure 5.
1. A request to retrieve a PNR is received from the user 10 at a Travel Dossier 47. The Travel Dossier 47 may be considered for this discussion to be equivalent in functionality to the Shopping Dossier 48 shown in Figure 3 and discussed above.
2. The Travel Dossier 47 sends a Retrieve PNR request to the SEF 42.
3. The SEF 42 sends a command to retrieve the SSR, SK, etc. to the Reservation Services 44.
4. The Reservation Services 44 sends a Retrieve PNR to the GDS 50 and receives the requested PNR from the GDS 50. This corresponds to the operation of the arrows 1 and Orchestrator 42 in Figure 4.
5. The Reservation Services 44 converts the returned PNR to the PNR element objects.
6. The Reservation services 44 returns the PNR element objects 38B to the SEF 42. The steps 4, 5 and 6 correspond to the operation of the arrows 1, RS and Orchestrator 42 in Figure 4.
7. The SEF 42 sends a command to retrieve from the PSF Retrieve function/module 41 the PSF services based on the PNR elements 38B.
8. The PSF Retrieve function/module 41 returns the PSF services. The steps 7 and 8 correspond to the operation of the arrows 2, Business Model 38 and PSF Retrieve function/module 41 in Figure 4.
9. A command is sent to the PSF Display function/module 37 to convert the PSF data into PSF Dynamic UI data.
10. The PSF Dynamic UI data is returned to the SEF 42.
11. The PSF data retrieved from the PNR in the GDS 50 is returned to the user 10 for display and possible modification.

Figure 6 shows an overview of PSF Configuration tool flow. At (1) the PSF Configuration tool 30 updates the PSF Configuration 30A in the database 20. At (2) the PSF Configuration tool 30 requests configuration validation from a PSF Configuration checker 60. PSF Configuration checker 60 loads the PSF Configuration 30A and validates it. PSF Configuration checker 60 can include at least the functionality of the PSF Load and Validate function/module 36 shown in Figures 2 and 3.

Further in accordance with the exemplary embodiments of this invention, and as employed herein, a "PSF Group" can be considered to be a service in a category containing one or several elements, an element can be considered to be an item in the PNR (e.g., SSR, RM, OSI, SK, OP) containing formatted text with one or several parameters, and a parameter can be considered to be a variable of the formatted text, depending on the user entry.

One non-limiting example of a PSF Group is one entitled "Pregnant". The Group "Pregnant" is a combination of a Special Service Request (SSR) of type MAAS (SSR code used for the service "Meet and Assist") and a Remark (RM). The SSR contains the pregnancy duration, in months, and the type of pregnancy, either single or multiple. The RM is optional and indicates if the passenger has been reminded to obtain a doctor certificate. Both can be sold only once per passenger and segment. An instance of this Group is stored in a PNR.

Group:
SSR MAAS CK HN1 PREGNANT/4MNTHS/SINGLE
RM PREG/ALREADY REMINDED TO GET DOCTOR'S CERTIFICATE

The group contains the SSR and RM elements, associated with one passenger and all flight segments from the PNR.

The SSR MAAS is a mandatory PSF element: PREGNANT/4MNTHS/SINGLE. The Remark is an optional PSF element: PREG/ALREADY REMINDED TO GET DOCTOR'S CERTIFICATE.

The element SSR can be duplicated per segment, while the RM is unique per segment.

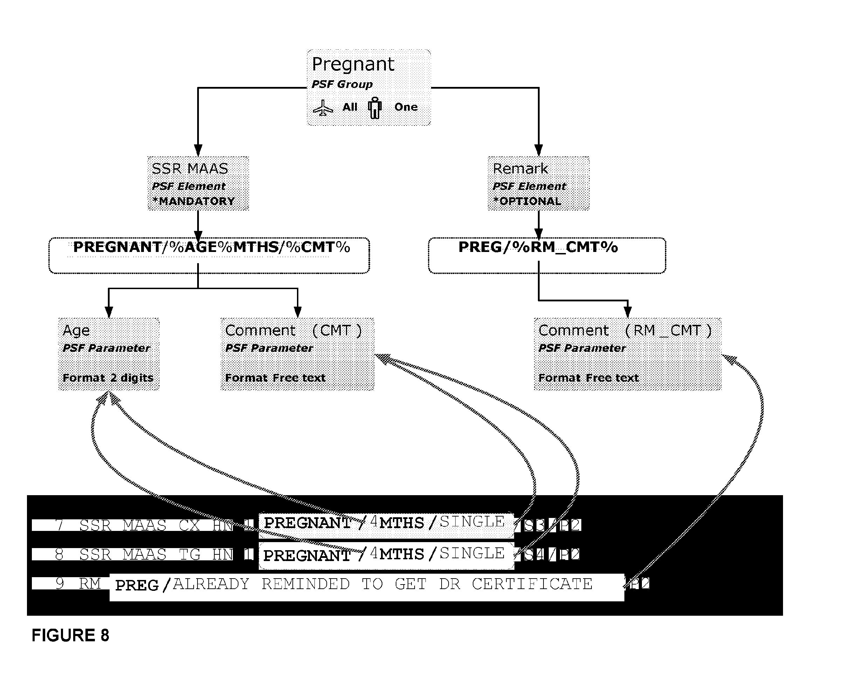

Figure 8 shows an example of the parameters. The parameters 'Age' (of the fetus) and 'Comment' (e.g., 'single' or'multiple' birth) are stored in the SSR, while the optional comment is stored in the RM (RM_CMT).

The above described PNR Service Framework (PSF) contains a set of modules, or services, interacting with each other to offer the PNR service functionality to the client application. One of these services is the PSF Retrieve Service (see Figures 4 and 5). A goal of the Retrieve Service is to identify all PSF groups from the PNR content and to extract the PSF Group, Element and Parameters from the content of the PNR.

In general, the PSF Retrieve Service has no control over the schema used to store the business data, i.e., the PNR. For example, most of the parameters can be stored in free flow text. PSF data are also mixed with non-PSF data, making it more difficult to distinguish relevant information from non-relevant information.

The PSF as enabled herein provides for the dynamic creation and modification of services, without limitation on the number of services supported. Each service benefits from the entire set of PSF functionalities from its creation.

The PSF Retrieve Service identifies PSF Groups from the PNR data. This process is performed in three steps.
(1) Check: Check if a PNR element is compatible with a configured PSF element constraint(s);
(2) Parse: Parse the free text of the PNR element and extract PSF parameters as retrieved PSF elements; and
(3) Merge: Merge the retrieved PSF elements into a PSF Group.

Each of these steps is now described in further detail, considering the retrieval of one PSF-configured Group.

### (1) Check

In this step those PNR element(s) applicable to each PSF element within the PSF Group are identified. The PNR element basic characteristics are considered, such as the PNR element type and/or its association to passenger and segment.

### (2) Parse

For each eligible PNR element identified during the previous step, the PSF attempts to extract parameter values from the element free text. The parser basically acts in two phases.

In a first phase a list of possible free text patterns is built from the PSF element format. The PSF Retrieve Service considers mandatory and optional parts of the free text format defined for the PSF element to build a tree, where there are as many tree paths as there are free text patterns.

In a second phase, if one free text pattern is matching it is used to extract values from the free text. The free text pattern is a regular expression. It allows the PSF to split the content of a free text into static data and parameter data.

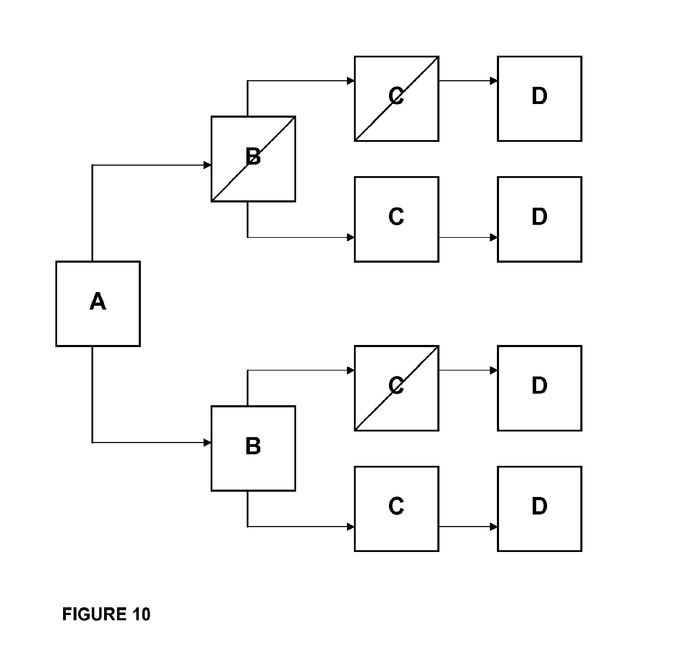

More specifically, each element format defined in PSF contains a set of mandatory and non-mandatory tokens, the latest being identified with parenthesis. For the format "A (B) (C) D", the exemplary tree shown in Figure 10 can be built:
In Figure 10 each optional token creates 2 sub-branches, one with the token available and one without. Each path builds a possible element format, here "A D", "A C D", "A B D" and "A B C D". These formats are all tested against the actual element free text. A format is considered a match if the entire format applies to the entire free text. Only a first matching format is considered. If a format is matching, the PSF goes to the second step.

In this second step, the parameter values are extracted in accordance with the format associated to their token. Note that the token is not necessarily a parameter and it can also be a static string, in such case, no parameter value is extracted. To extract a parameter value, the algorithm can be a classic algorithm. The algorithm proceeds one character at a time from free text, starting at position 0. As long as it is not matching the process continues. As soon as a match is found the process continues, until it does not match again or there are no more characters. For example, if the parameter is a date whose format is "ddMMMyyyy" the free text could be "25AUG08 OR NEXT MONDAY". Parsing is (O meaning Ok, K meaning KO):
First the process tries to match "2" K
Then the process tries to match "25" K
"25A" K
"25AU" K
"25AUG" K
"25AUG0" K
"25AUG08" O
"25AUG08 " K

Under these conditions the process fails as the free text does not match the date format

### (3) Merge

After the check and parse steps are completed the PSF Retrieve Service has extracted a set of PSF elements. The role of the merge step is to group those elements into consistent PSF Groups.

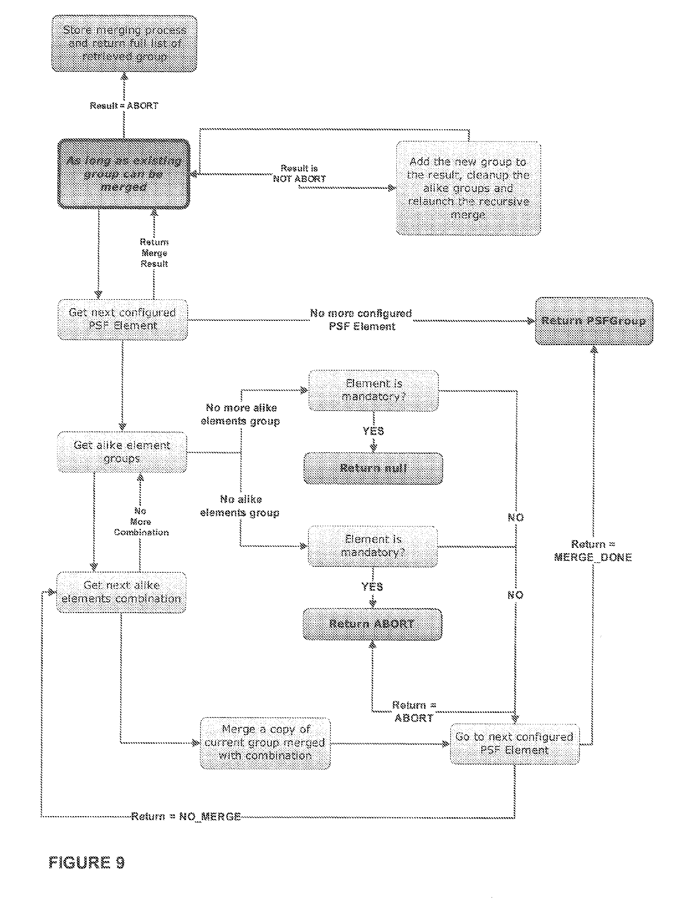

One exemplary algorithm to perform the merge is as follows. Reference is also made to Figure 9.

First, the list of configured PSF elements is sorted according to their granularity. Some elements are most fine-grained in terms of passenger and segment association. Those elements are considered first when attempting to create a PSF group.

A list of "alike elements groups" is built. Each of these groups contains PSF elements sharing the same free text and characteristics. At least one alike element group is built for every PSF element.

Next, PSF elements are merged together into PSF Groups, iterating over alike element groups, starting from the most fine-gained PSF elements.

The last step can be described in further detail as follows:
An alike element group returns a combination of PSF elements and the algorithm verifies if this combination is compliant with the group being built in terms of passenger and segment association. If not, another combination is requested from the alike element group and it starts over.

If the combination is compliant, the next element from the PSF Group is considered, until all PSF elements have been retrieved and the PSF Group is completed.

The algorithm begins again for the next instance of the PSF Group, until no other PSF Group instance can be built.

This algorithm operates to group elements according to group constraints. An aspect of the operation of the algorithm is that any combination of element and association can be retrieved as long as it is compliant with the group constraints.

With regard to element merging rules, consider a set of elements SSR/SK, RM, OSI, OP, and SVC. Each of these elements is subject to parameter rules and association rules. For the SSR/SK the parameter rule is that they must have the same free text and the same 4-letter code, and the association rule is that the combination of their passenger and segment associations is compatible with group constraints. As an example, a SSR associated with segments 1 and 2 can be merged with the SSR associated with segment 3 if the group is associated with segments 1, 2 and 3. For the RM the parameter rule is that they must have the same free text and the same confidential office ID and type (if applicable). The association rules can be the same as for the SSR/SK element. For the OSI element the parameter rule is that they must have the same free text, while the association rule is that the combination of the passenger associations is compatible with group constraints. For example, an OSI associated with passengers 1 and 2 can be merged with an OSI associated with passenger 3 if the group is associated with passengers 1, 2 and 3. For the OP element the parameter rule is that they must have the same free text, queue type and number, queue category, destination and authorized office IDs, while the association rule can be the same as for the OSI. For the SVC element the parameter/association rule is that they cannot be merged since the SVC is always associated with one passenger and with no flight segments.

The PSF re-creates the PSF Groups that are consistent with the configuration and attempts to build the largest possible consistent PSF Group. This means that if for any reason two identical PSF Groups with different associations are created, they will be retrieved as one PSF Group.

In general, a PSF Group is retrieved only if all the mandatory elements are retrieved. As a consequence if one mandatory element is missing from the group the PSF does not retrieve it even if all others elements are available in the PNR.

Further, the PSF retrieval interprets the PNR content based on the PSF configuration. In a worst case scenario the PSF Group is not retrieved but the elements it is composed of are still available to the client application for other business logic processing.

In accordance with an aspect of this invention from a particular configuration it is possible to dynamically generate the User Interface form, validate parameter values provided by the end user, book only coherent groups of PNR elements, retrieve the group and extract parameter values from the PNR and modify, validate and book again.

Further in accordance with another aspect of this invention a layout manager provides a User Interface generated from a configuration, a data load service loads data from a generic interface, a data check service validates the input data, and a formatting service formats the elements for the GDS interface.

Further in accordance with another aspect of this invention a retrieval service enables one to recreate the PSF Group from independent GDS elements, a configuration manager operates to handle multiple configuration versions and to validate a configuration before adding it to the database, and a migration engine provides forced format migration.

The exemplary embodiments of this invention may be implemented at least in part by the use of XML (Extensible Markup Language). In order to define an XML interface, an XML schema (XSD) must be provided to the interface user in order to share the input/output format. The input/output must then correspond to the XSD otherwise the validations will generate an error.

For each evolution of the user interface, and whether there are new elements to add or modifications need to be made to existing elements, there are two major approaches that could be used:
1. creation of a new XSD replacing the existing XSD, where every user must update the code to handle the new input/output even if the user(s) are not interested in the change; and
2. creation of a new version of the XSD while keeping the previous version so that only interested users need use the new version.

One drawback of the first approach is that any change impacts all of the customers, while one drawback of the second approach is that more than one version of the user interface must be maintained. Further, both approaches imply that any modification will need some development on the interface side and on the client side, which can negatively impact the turn-around and development time.

In accordance with the embodiments of this invention there is provided a configurable generic interface, wherein the portion or portions of the user interface likely to change the most often are extracted and designed as configurable data. In XML this type of data is embodied as generic elements with Key-Value attributes. During use the interface is published and the configuration shared with the relevant customer.

By using the configuration there is no need to change the interface for new/updated parts, less development effort is needed and correspondingly less development cost is incurred. Further, only certain defined customers are impacted by the changes and not the others. Further still, the interface can be customizable on a customer-by-customer basis.

As should be appreciated at this point, the exemplary embodiments of this invention provide an over layer of a system that is able to propose a configurable, structured, business oriented model independent from system constraints. The use of this over layer allows by configuration (no development necessary) to change the model and the associated dynamic UI built directly from the configuration. The embodiments of this invention can be viewed as providing an evolved interface allowing a dynamic evolution of the input model and, by means of sharing the configuration, allows the dynamic creation of a UI.

The foregoing description has provided by way of exemplary and non-limiting examples a full and informative description of various method, apparatus and computer program software for implementing the exemplary embodiments of this invention. However, various modifications and adaptations may become apparent to those skilled in the relevant arts in view of the foregoing description, when read in conjunction with the accompanying drawings and the appended claims. As but some examples, the use of other similar or equivalent data structures and logic flows may be attempted by those skilled in the art. However, all such and similar modifications of the teachings of this invention will still fall within the scope of the embodiments of this invention.

Furthermore, some of the features of the exemplary embodiments of this invention may be used to advantage without the corresponding use of other features. As such, the foregoing description should be considered as merely illustrative of the principles, teachings and embodiments of this invention, and not in limitation thereof.

## Claims

1. A computer-implemented method to interact with a user, comprising:
receiving information from a user (10) via a configuration tool (30),
**characterized in that** the information is related to a request made by the user (10) to implement a user interface for a bilateral special service request;
and **in that** the method comprises the following steps performed with at least one data processor: using the received information, in conjunction with a passenger name record service framework, implementing a user-specific user interface to permit one or more passenger name record elements (1A, ..,1 G) associated with an instance of the requested bilateral special service request to be included as an element of an instance of a passenger name record.

2. The computer-implemented method of claim 1, where the user interface is configured to enable the creation of the instance of the bilateral special service request to be included as the element in the instance of the passenger name record, as well as to enable the modification of a previously created instance of the bilateral special service request that was previously included as the element in the instance of the passenger name record.

3. The computer-implemented method of claim 1, further comprising verifying consistency of the implemented bilateral special service request at least in part by verifying passenger name record element format consistency.

4. The computer-implemented method of claim 1, where the user interface is configured to input from the user (10) passenger name record service framework data objects (38A), and further comprising formatting the passenger name record service framework data objects (38A) into passenger name record data element objects (38B) for storage in the instance of the passenger name record.

5. The computer-implemented method of claim 1, further comprising:
in response to a receipt of a request from the user (10) to retrieve a passenger name record, accessing a database (50), held in data storage means, to retrieve the requested passenger name record;
converting at least a portion of the passenger name record into corresponding passenger name record service framework element data objects;
converting the passenger name record service framework element data objects into passenger name record service framework user interface data and returning the data to the user (10).

6. The computer-implemented method of claim 1, further comprising enabling the user (10) to define a passenger name record service framework group comprised of at least one mandatory passenger name record service framework element comprised of at least one passenger name record service framework parameter, and an optional at least one passenger name record service framework remark comprised of a passenger name record service framework free text parameter.

7. The computer-implemented method of claim 6, where the mandatory passenger name record service framework element is further comprised of at least one passenger name record service framework comment comprised of a free text parameter.

8. The computer-implemented method of claim 6, further comprising retrieving a passenger name record service framework group from passenger name record data by steps of checking if a passenger name record element (1A, ..,1 G) is compatible with configured passenger name record configuration framework element constraint(s); parsing free text of the passenger name record element (1A, ..,1G) and extracting passenger name record service framework parameters as retrieved passenger name record service framework elements; and merging retrieved passenger name record service framework elements into the passenger name record service framework group.

9. The computer-implemented method of claim 8, where merging comprises sorting a list of configured passenger name record service framework elements according to their granularity, where some elements are most fine-grained in terms of passenger and segment association, and considering the most fine-grained elements first when creating a passenger name record service framework group, and further comprising building a list of alike elements groups each contains passenger name record service framework elements sharing the same free text and characteristics, where at least one alike element group is built for each passenger name record service framework element, and merging passenger name record service framework elements passenger name record service framework groups by iterating over alike element groups starting from the most fine-gained PSF elements and where the step of merging is performed in accordance with element merging rules, where individual ones of the elements are subject to at least one associated parameter rule and association rule.

10. The computer-implemented method of claim 9, where an alike element group returns a combination of passenger name record service framework elements, further comprising verifying if the returned combination is compliant with the passenger name record service framework group being built in terms of passenger and segment association, where if the returned combination is not compliant requesting another combination of passenger name record service framework elements from the alike element group and repeating the step of verifying, and where if the returned combination is compliant considering a next element from the passenger name record service framework group until all passenger name record service framework elements have been retrieved and the passenger name record service framework group is completed, and continuing for a next instance of the passenger name record service framework group until no further passenger name record service framework Group instance can be built.

11. A non-transitory computer-readable medium that contains software program instructions, where execution of the software program instructions by at least one data processor results in performance of operations that comprise execution of the method as in any one of claims 1-10.

12. System to interact with a user (10) **characterized in that** it is arranged to perform the following steps with at least one data processor:
receiving information from a user (10) via a configuration tool (30), the information being related to a request made by the user (10) to implement a user interface for a bilateral special service request; and
using the received information, in conjunction with a passenger name record service framework, implementing a user-specific user interface to permit one or more passenger name record elements (1A, ..,1G) associated with an instance of the requested bilateral special service request to be included as an element of an instance of a passenger name record.

13. A computer-implemented method, comprising the following steps performed with at least one data processor:
inputting from a user (10) passenger name record service framework data objects (38A) that are associated with an instance of a special service request; and
formatting the passenger name record service framework data objects (38A) into passenger name record data element objects (38B) for storage in an instance of the passenger name record;
and further comprising:
in response to a receipt of a request from the user (10) to retrieve a passenger name record, accessing a database (50) held in data storage means to retrieve the requested passenger name record;
converting at least a portion of the passenger name record into corresponding passenger name record service framework element data objects;
converting the passenger name record service framework element data objects into passenger name record service framework user interface data, returning the data to the user (10) and displaying the data on display means of the user (10).

14. The computer-implemented method of claim 13, further comprising enabling the user (10) to define a passenger name record service framework group comprised of at least one mandatory passenger name record service framework element comprised of at least one passenger name record service framework parameter, and an optional at least one passenger name record service framework remark comprised of a passenger name record service framework free text parameter.

15. The computer-implemented method of claim 13, comprising initial steps of
receiving information from the same or a different user (10) via a configuration tool (30), the information being related to a request made by the user (10) to implement a user interface for the special service request; and
using the received information, in conjunction with a passenger name record service framework, implementing a user-specific user interface to permit one or more passenger name record elements (1A, ..,1G) associated with an instance of the requested special service request to be included as an element of an instance of a passenger name record.

16. The computer-implemented method of claim 15, where the user interface is configured to enable the creation of the instance of the special service request to be included as the element in the instance of the passenger name record, as well as to enable the modification of a previously created instance of the special service request that was previously included as the element in the instance of the passenger name record.

17. The computer-implemented method of claim 15, further comprising verifying consistency of the implemented special service request at least in part by verifying passenger name record element (1A, ..,1 G) format consistency.
